# EUROPEAN PATENT SPECIFICATION

(11) **EP 3 547 142 B1**
(45) Date of publication and mention of the grant of the patent: **24.08.2022**
(21) Application number: 17886217.3
(22) Date of filing: 27.12.2017
(51) Int. Cl.: G06F 12/0875, G06F 12/121, G06F 11/36, G06F 11/30, G06F 3/06

(54) **PROCESSING MESSAGE**
NACHRICHT VERARBEITEN
MESSAGE DE TRAITEMENT

(30) Priority: 28.12.2016 CN 201611236629
(43) Date of publication of application: 02.10.2019
(73) Proprietor: New H3C Technologies Co., Ltd., Binjiang District Hangzhou Zhejiang 310052 (CN)
(72) Inventor: AN, Shaoliang, Beijing 100085 (CN); GE, Changzhong, Beijing 100085 (CN)
(74) Representative: Grünecker Patent- und Rechtsanwälte PartG mbB
(86) International application number: PCT/CN2017/118842
(87) International publication number: WO 2018/121558

(56) References cited:
- WO-A1-2015/169245
- CN-A- 103 034 581
- CN-A- 104 503 907
- CN-A- 105 159 819
- CN-A- 105 528 261
- CN-A- 105 808 463

## Description

### BACKGROUND

During debugging and running of a device, numerous operation messages will be generated by processes in the device and may be displayed on a display screen so as to be viewed by an administrator. Since the size of the display screen is limited, the oldest operation message that has been displayed will be overwritten when the total number of the generated operation messages exceeds the maximum number of messages that can be displayed on the display screen.

For example, assuming that the maximum number of messages that can be displayed on a display screen is M, the operation messages generated by the processes will be displayed on the display screen one by one. When the total number of the generated operation messages is M, the first to the M-th operation messages are displayed on the display screen. If an (M+1)-th operation message is generated subsequently, the first operation message will be overwritten so that the second to the (M+1)-th operation messages are displayed, and so on. Thus, the display screen always displays the latest M messages.

WO 2015/169 245 A1 discloses a data caching method, a cache and a computer system. In the method, when an access request does not hit a cache line to be replaced which is required to be determined, a cache not only needs to take account of a historical access frequency of the cache line, but also needs to take account of a memory type corresponding to the cache line, so that the cache line corresponding to the memory type of a DRAM can be replaced preferentially, thereby reducing the caching amount of the cache for data stored in the DRAM, and therefore, the cache can increase the caching amount of data stored in an NVM, so that for the access request of the data stored in the NVM, corresponding data can be found in the cache as much as possible, thereby reducing cases of data being read from the NVM, reducing the delay of reading data from the NVM and effectively improving the access efficiency.

CN 103 034 581 A discloses an embedded system trace debugging method. The embedded system trace debugging method comprises the following steps of: after a mission calls trace module to start tracing, assigning a specific information storage area for the mission for calling the trace module in a trace information cache region; obtaining trace information data of the mission, assembling the trace information and writing the trace information into the information cache region by the trace module; and reading the cached trace information, and sending the trace information to analyzing equipment to carry out trace information analysis by a trace information sending module. The invention further discloses an embedded system trace debugging device suitable for the method. According to the technical scheme provided by the invention, the problem of a cache conflict of the trace information in trace debugging of an embedded system can be effectively solved.

CN 105 808 463 A provides a serial port output method for debugging information in an embedded system. The method comprises the following steps: creating a serial port service process in the embedded system, wherein the serial port service process comprises a main thread, a data cache area and a data output thread; taking over debugging information data output by all the user processes by the main thread, and storing the input debugging information data into the data cache area in sequence; detecting the data cache area by the data output thread, and outputting the debugging information stored in the data cache area to serial equipment in sequence. According to the method provided by the invention, the debugging information of the user processes is output to the serial equipment in a non-blocking manner, the output data of the user processes is uniformly and temporarily stored through a data cache area form, and the debugging information is output in sequence in a uniform cache queue form, so that the output of the debugging information of the user processes is not influenced, the output sequence of the debugging information of a plurality of user processes can be ensured, and the operation efficiencies of the user processes can be improved.

CN 105 528 261 A discloses a method and system for intelligently outputting debugging information for an embedded device, and relates to the debugging technology field of the embedded device. The method comprises the steps of adding a cache region in a management terminal of the embedded device, presetting a detection interval period and an idle time threshold value, and setting an initialization time point when processing is started as a time point value T1; in each detection interval period, when an IO operation exists, executing the IO operation and updating the T1; when no IO operation exists, determining that a difference value between the current time and the T1 is greater than the idle time threshold value and debugging information to be output exists in the cache region, outputting the debugging information to an IO interface; and repeating the above detection steps until the next detection interval period is not required to enter, over. An outputting time can be intelligently selected for the debugging information, user operation can be preferentially responded, the debugging information cannot be lost, information disorder and crossing can be prevented, and user experience and device usability can be significantly improved.

CN 104 503 907 A discloses a remote debugging method and a system for an application program based on a linux system. The system comprises local debugging equipment and remote display debugging data terminal equipment, wherein the debugging equipment is used for operating a debugging server program and a debugged application program; the debugging server program is used for creating a sharing annular queue data buffer region when the debugging equipment is started, providing the sharing annular queue data buffer region to other application programs to access and manage various function interfaces of the sharing annular queue data buffer region, and starting a TCP/IP (transmission control protocol/internet protocol) service function; the application program is used for writing generated debugging data into the annular queue data buffer region through a writing interface unit, and updating data writing position information in a buffer space management unit; the remote display debugging data terminal equipment is connected with the debugging equipment according to an IP address and a port number which are provided by the debugging service program, and receives equipment operational condition, fault information and debugging data, which are returned by the debugging equipment, and thus the target of remote diagnosis of the debugging equipment is achieved.

CN 105 159 819 A provides a method and a system for recording kernel exception stack and debugging information. The method comprises the steps of: stating that two global variables are used for storing and recording file handles and kernel exception marker bits in advance, and meanwhile, stating that a global variable array is used as a cache region for storing kernel exception information; when kernel exception occurs, opening a file used for recording kernel exception stack information in a storage medium, and recording file handles of the file into the global variables; meanwhile, setting a kernel exception generation marker; when a printk function is called, and the position of the kernel exception generation marker is detected, caching the current kernel exception stack information by the global variable array; and finally, according to the file handles, storing the kernel exception stack information cached in the global variable array into the corresponding file used for recording the kernel exception stack information. The method and the system have the advantages that the automatic recording of the kernel exception stack and debugging information is realized; and the file is generated and stored into the storage medium, so that the kernel exception can be conveniently located in the subsequent process.

### SUMMARY

It is the object of the present invention to provide an improved method for processing and outputting a message, as well as a corresponding device.

This object is solved by the subject matter of the independent claims.

Preferred embodiments are defined in the dependent claims.

### BRIEF DESCRIPTION OF THE DRAWINGS

FIG. 1 illustrates a schematic structure diagram of a cache pool according to an example of the present disclosure.
FIG. 2 illustrates another schematic structure diagram of a cache pool according to an example of the present disclosure.
FIG. 3 illustrates a flow diagram of a method of processing a message based on the cache pool shown in FIG. 1 according to an example of the present disclosure.
FIG. 4 illustrates a flow diagram of a method of processing a message based on the cache pool shown in FIG. 2 according to an example of the present disclosure.
FIG. 5 illustrates a schematic structure diagram of a device for processing a message according to an example of the present disclosure.
FIG. 6 illustrates a schematic structure diagram of a device for processing a message according to another example of the present disclosure.

### DETAILED DESCRIPTION OF THE EMBODIMENTS

Example embodiments will be described in detail herein with the examples thereof represented in the drawings. When the following descriptions involve the drawings, like numerals in different drawings represent like or similar elements unless stated otherwise. The implementations described in the following example embodiments do not represent all implementations consistent with the present disclosure. On the contrary, they are examples of a device and a method described in detail in the appended claims that are consistent with some aspects of the present disclosure.

The terminology used in the present disclosure is for the purpose of describing a particular example only, and is not intended to be limiting of the present disclosure. The singular forms such as "a", 'said", and "the" used in the present disclosure and the appended claims are also intended to include multiple, unless the context clearly indicates otherwise. It is also to be understood that the term "and/or" as used herein refers to any or all possible combinations that include one or more associated listed items.

It should be appreciated that although different information may be described using the terms such as first, second, third, etc. in the present disclosure, the information should not be limited to these terms. These terms are used only to distinguish the same type of information from each other. For example, the first information may also be referred to as the second information without departing from the scope of the present disclosure, and similarly, the second information may also be referred to as the first information. Depending on the context, the word "if' as used herein may be interpreted as "when" or "as" or "determining in response to".

According to an example of the present disclosure, there is provided a method of processing a message and a device for processing a message to which the method is applied.

According to the method of processing a message, after an operation message is generated, a processor may determine whether a block cache matching the operation message exists in a cache pool, where the cache pool includes a plurality of block caches for caching different operation messages.

If the matched block cache exists in the cache pool, the processor may update a condition parameter in the block cache.

Then, the processor may determine whether the matched block cache satisfies a preset output condition according to the condition parameter in the matched block cache.

If the block cache satisfies the preset output condition, the processor outputs an operation message in the block cache.

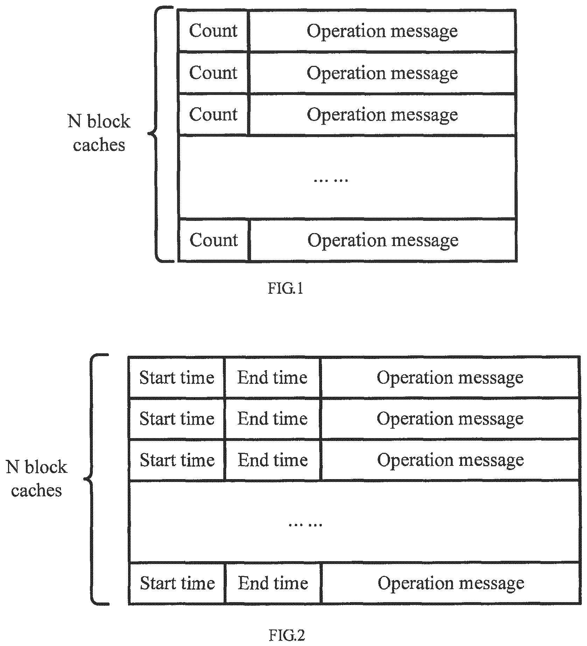

During debugging and running of a device, numerous operation messages may be generated by processes in the device. To process such operation messages, a cache space may be set up as a cache pool on the device. As shown in FIG. 1 or FIG. 2, the cache pool may be partitioned into N block caches for caching operation messages and parameters relating to the operation messages, where N is a positive integer which can be set according to actual requirements.

As shown in FIG 1, each block cache in the cache pool may be configured to cache an operation message and a count corresponding to the operation message, where the initial value of the count may be set to 0, which indicates that the block cache is in an idle state.

For another example, as shown in FIG. 2, each block cache in the cache pool may be configured to cache an operation message, start time and end time corresponding to the operation message, where the start time is the time when the operation message is first generated and the end time is the time when the operation message is last generated.

Apparently, the block cache shown in FIG. 1 or FIG. 2 may also contain a status flag for indicating whether the block cache is idle, and the initial value of the status flag is set to Idle. In addition, the block cache structure as shown in FIG. 1 and the block cache structure as shown in FIG. 2 may also be combined so that a block cache may be used for caching a count, start time, end time, and an operation message.

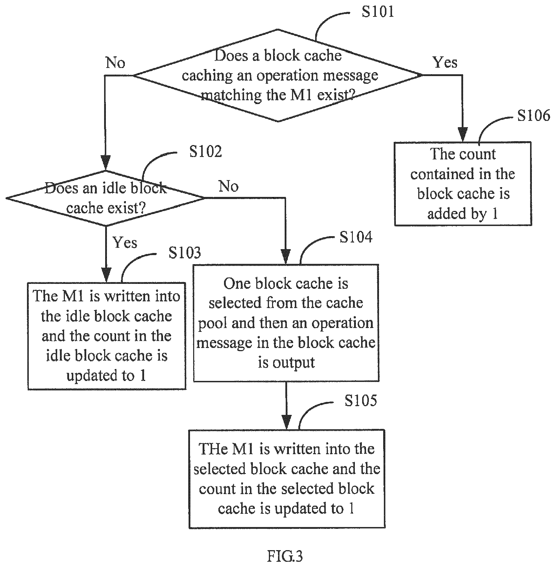

Thus, when the block caches in the cache pool are as shown in FIG. 1, a method of processing a message according to an example of the present disclosure may be as shown in FIG. 3, including the following blocks:

At block S101, after an operation message (denoted as M1, for the convenience of description) is generated, it is determined whether a block cache, which caches an operation message matching the M1, exists in a cache pool. If no, block S102 is executed, and if yes, block S106 is executed.

The operation message matching the M1 may be the same operation message as the M1, and may also be an operation message that fuzzily matches the M1. Thus, at block S101, it may be determined whether a block cache, which caches an operation message matching the M1, exists in a cache pool according to the following method 1 or method 2.

### Method 1: Exact Match Method

For each non-idle block cache in a cache pool, it may be determined whether an operation message in the block cache is the same as the M1. If yes, it is determined that the operation message in the block cache matches the M1, so that it is determined that a block cache, which caches an operation message matching the M1, exists in the cache pool, or otherwise, it is determined that no block cache, which caches the operation message matching the M1, exists in the cache pool.

### Method 2: Fuzzy Match Method

For each non-idle block cache in a cache pool, it may be determined whether a code ID contained in the block cache is the same as an ID of a piece of code that generates the M1. If yes, it is determined that an operation message in the block cache fuzzily matches the M1, so that it is determined that a block cache, which caches the operation message matching the M1, exists in the cache pool. Or otherwise, it is determined that no block cache, which caches the operation message matching the M1, exists in the cache pool, where the code ID contained in the block cache is an ID of the code that generates the operation message in the block cache.

Apparently, in the above method 2, a block cache as shown in FIG. 1 is further required to contain a code ID which is the ID of the code that generates an operation message in the block cache. By using the method 2, the time for determination can be reduced and the efficiency of determination can be improved.

A program may be composed of one or more files, where each file contains one or more functions and code lines in each file are independently numbered. Therefore, the above code ID may specifically be composed of a line number of the code and the name of a function to which the code belongs, or composed of a line number of the code and the name of a file to which the code belongs.

At block S102, it is determined whether an idle block cache exists in the cache pool. If yes, block S103 is executed, or otherwise, block S104 is executed.

At block S103, the M1 is written into the idle block cache and the count contained in the idle block cache may be updated to 1, and then the flow is terminated. If the block cache contains a status flag, it is further required to update the status flag to Non-idle at block S103.

At block S104, one block cache may be selected from the cache pool and then an operation message in the block cache may be output, and then block S105 is executed.

At block S104, one block cache is selected from the cache pool according to a particular selection rule. For example, one block cache containing a maximum count may be selected, or one block cache may be randomly selected, which will not be limited herein.

At block S105, the M1 is written into the selected block cache and the count contained in the selected block cache may be updated to 1, and thus the flow is terminated.

After block S105 is executed, the operation message cached in the block cache may be updated to the M1.

At block S106, the count contained in the block cache which caches the operation message matching the M1 is added by 1, and then the flow is quitted.

In addition, it is also required to determine whether the block cache satisfies a preset output condition according to the count in the block cache. The preset output condition is that the count contained in the block cache reaches a preset threshold. If the preset output condition is satisfied, the operation message in the block cache may be output. By setting the above preset output condition, the operation message of which the accumulated number reaches the preset threshold may be output.

In an example, after block S106 is executed, it may be determined, for the block cache of which the count is added by 1, whether the count contained in the block cache reaches the preset threshold. If yes, the operation message in the block cache may be output and the count may be updated to 0. If the block cache contains a status flag, the status flag may also be updated to Idle. For another example, it may also be determined whether the count contained in each non-idle block cache in the cache pool reaches the preset threshold when a preset time period expires. If yes, the operation message in the block cache may be output and the count may be updated to 0. If the block cache contains a status flag, the status flag may also be updated to Idle.

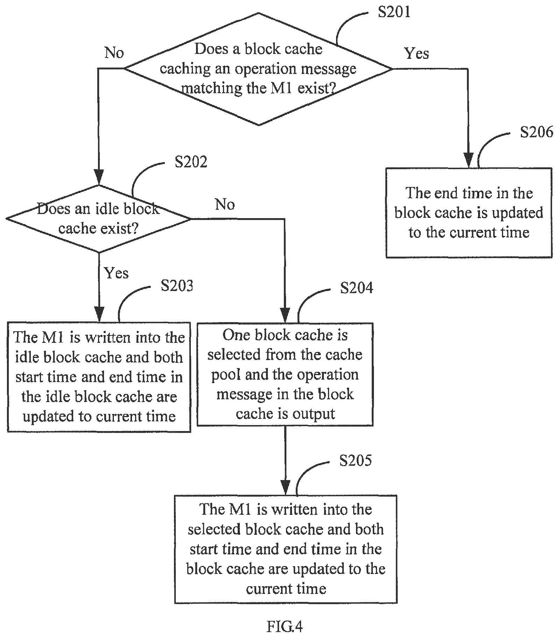

Besides, when the block caches in the cache pool are as shown in FIG. 2, a method of processing a message according to an example of the present disclosure may be as shown in FIG. 4, including the following blocks.

At block S201, after the M1 is generated, it may be determined whether a block cache, which caches an operation message matching the M1, exists in the cache pool. If no, block 202 is executed, and if yes, block S206 is executed.

At block S202, it may be determined whether an idle block cache exists in the cache pool. If yes, block S203 is executed, or otherwise, block S204 is executed.

At block S203, the M1 may be written into the idle block cache and both start time and end time in the idle block cache may be updated to current time, and thus the flow is terminated. If the block cache contains a status flag, it may be further required to update the status flag to Non-idle at block S203.

At block S204, one block cache may be selected from the cache pool and the operation message in the block cache may be output, and then block S205 may be executed.

At block S204, one block cache may be selected from the cache pool according to a particular selection rule. For example, one block cache containing the earliest end time may be selected, or one block cache may be randomly selected, which will not be limited herein.

At block S205, the M1 may be written into the selected block cache and both start time and end time in the block cache may be updated to the current time, and thus the flow is terminated.

After block S205 is executed, the operation message cached in the selected block cache may be updated to the M1.

At block S206, the end time in the block cache which caches the operation message matching the M1 may be updated to the current time, and thus the flow may be terminated.

In addition, it may be also required to determine whether the block cache satisfies a preset output condition according to the count in the block cache. The preset output condition may be that a difference between current time and end time in the block cache is greater than a preset time threshold. If the preset output condition is satisfied, the operation message in the block cache may be output. By setting the above preset output condition, the operation message in the block cache may be output which satisfies the condition that a difference between the current time and the end time when the operation message is last generated reaches the preset time threshold.

For example, after block S206 is executed, it may be determined, for the block cache in which the end time is updated, whether a difference between the current time and the end time in the block cache is greater than the preset time threshold. If yes, the operation message in the block cache may be output. If the block cache contains a status flag, the status flag may also be updated to Idle. For another example, for each non-idle block cache in the cache pool, it may also be determined whether a difference between the current time and the end time in the block cache is greater than the preset time threshold when a preset time period expires. If yes, the operation message in the block cache may be output. If the block cache contains a status flag, the status flag may also be updated to Idle.

In the above method as shown in FIG. 3 or FIG. 4, when an operation message in the block cache is output, parameters relating to the operation message, such as the count or the start time and the end time, may also be output together. In practical implementation, the operation message and the relevant parameters thereof may be directly output to a display screen for display, and may also be stored in a queue or a log file and then displayed when required. An administrator may view such relevant parameters while viewing the operation message and can conduct analysis and processing work such as fault location with such relevant parameters.

Additionally, in another example, when the block cache structure as shown in FIG. 1 is combined with the block cache structure as shown in FIG. 2, so that a block cache is used for caching a count, start time, end time and a operation message, then the method of processing a message may be a combination of the method as shown in FIG. 3 and the method as shown in FIG. 4, which will not be redundantly described herein. For example, when adding the count in a block cache by 1, it may also be required to update the end time to the current time. When the count in the block cache is updated to 1, it may also be required to update both the start time and the end time to the current time.

In the above method according to one or more examples of the present disclosure, operation messages may be merged. When the operation message obtained by the merging satisfies a preset output condition, the operation message may be output. Thus, message redundancy can be reduced without reducing the message content. Moreover, when the output operation message is displayed subsequently, more different operation messages can be displayed on the display screen, improving the displaying efficiency.

Corresponding to the aforesaid examples of the method of processing a message, the present disclosure also provides an example of a device for processing a message.

An example of a device for processing a message 50 in the present disclosure may be applied to a device capable of generating an operation message. The device example may be implemented by software, and may also be implemented by hardware or a combination of software and hardware.

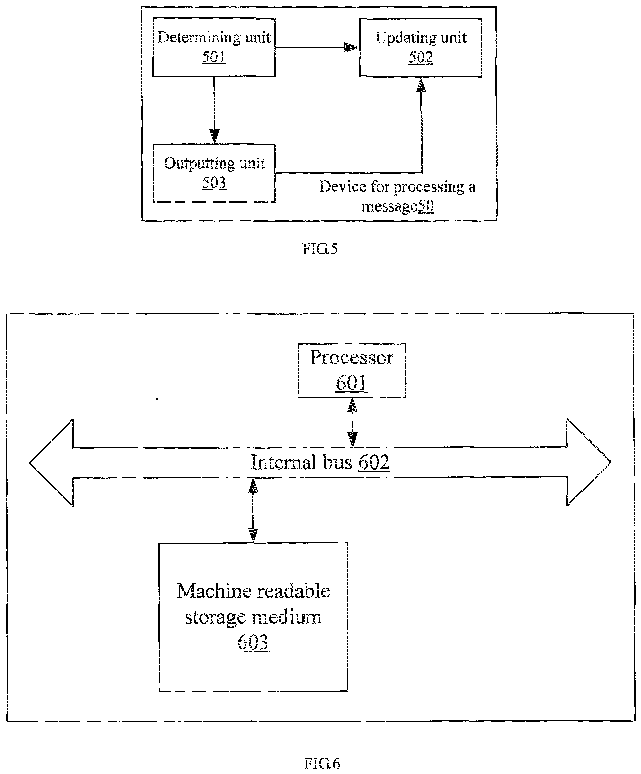

FIG. 5 illustrates a schematic structure diagram of a device for processing a message according to an example of the present disclosure. The device for processing a message 50 includes the following units: a determining unit 501, an updating unit 502, and an outputting unit 503.

The determining unit 501 is configured to determine whether a first block cache matching a first operation message exists in a cache pool after the first operation message is generated, where the cache pool includes a plurality of block caches for caching different operation messages, respectively and the determining unit 501 may also be configured to determine whether the first block cache satisfies a preset output condition according to a condition parameter in the first block cache.

The updating unit 502 is configured to update a condition parameter in the first block cache if the determining unit 501 determines that the first block cache exists in the cache pool.

The outputting unit 503 is configured to output an operation message in the first block cache if the determining unit 501 determines that the first block cache satisfies the preset output condition.

In an example, the updating unit 502 is configured to update the condition parameter in the first block cache in the following manner: adding a count in the first block cache by 1, where the preset output condition is that the count in the first block cache reaches a preset threshold.

When determining that the first block cache does not exist in the cache pool, the determining unit 501 may determine whether an idle second block cache exists in the cache pool. If the determining unit 501 determines that no idle second block cache exists in the cache pool, the outputting unit 503 may select a third block cache satisfying the preset output condition from the cache pool. Then, the outputting unit 503 outputs second operation message in the third block cache.

The updating unit 502 is also configured to write the generated first operation message into the second block cache and update a count in the second block cache to 1 if the determining unit 501 determines that the first block cache does not exist in the cache pool but the idle second block cache exists in the cache pool; and also the updating unit 502 may be configured to write the generated first operation message into the third block cache and update a count in the third block cache to 1 after the outputting unit 503 outputs the second operation message in the selected third block cache.

In another example, the updating unit 502 is specifically configured to update the condition parameter in the first block cache in the following manner: updating end time in the first block cache to current time, wherein the above preset output condition is that a difference between the current time and the end time in the block cache is greater than a preset threshold.

In another example, the outputting unit 503 is also configured to select a third block cache from the cache pool and output the second operation message in the third block cache if the determining unit 501 determines that the first block cache and the idle second block cache do not exist in the cache pool.

The updating unit 502 is also configured to write the generated first operation message into the second block cache and update the start time and the end time in the second block cache to the current time if the determining unit 501 determines that the first block cache does not exist in the cache pool but the idle second block cache exists in the message buffer pool; also the updating unit 502 may be configured to write the generated first operation message into the third block cache and update the start time and the end time in the third block cache to the current time after the outputting unit 503 outputs the second operation message in the selected third block cache.

Details of the implementation process of the functions and effects of different units in the above-described device may be seen from the implementation process of corresponding blocks in the above-described method, which will not be redundantly described herein.

FIG. 6 illustrates a schematic structure diagram of a device for processing a message according to another example of the present disclosure. The device for processing a message includes: a processor 601 and a machine-readable storage medium 602 that stores machine-executable instructions. The processor 601 may communicate with the machine-readable storage medium 602 via a system bus 603. The processor 601 may execute the above-described method of processing a message by reading and executing the machine-executable instructions on the machine-readable storage medium 602.

The machine-readable storage medium 602 described herein may be any electronic, magnetic, optical or other physical storage device, and may contain or store information, such as executable instructions, data and the like. For example, the machine-readable storage medium may be a Random Access Memory (RAM), a volatile memory, a nonvolatile memory, a flash memory, a storage drive (e.g., hard disk drive), a solid state disk, any type of storage disk (e.g., optical disk, Digital Video Disk (DVD)), or a similar storage medium, or a combination thereof.

The machine-readable storage medium 602 is used to store program instructions run by the determining unit 501, program instructions run by the updating unit 502, and program instructions run by the outputting unit 503.

The processor 601 is used to execute the program instructions run by the determining unit 501, the program instructions run by the updating unit 502, and the program instructions run by the outputting unit 503. The processor 601 may implement the method of processing a message as described above by executing the program instructions run by each of the above units.

Since the device examples substantially correspond to the method examples, a reference may be made to part of the descriptions of the method examples for the related part. The device examples described above are merely illustrative, where the units described as separate members may be or not be physically separated, and the members displayed as units may be or not be physical units, i.e., may be located in one place, or may be distributed to a plurality of network units. Part or all of the modules may be selected according to actual requirements to implement the objectives of the solutions in the examples. Those of ordinary skill in the art may understand and carry out them without creative work.

It needs to be noted that the relational terms such as "first" and "second" used herein are merely intended to distinguish one entity or operation from another entity or operation rather than to require or imply any such actual relation or order existing between these entities or operations. Also, the term "including", "containing" or any variation thereof is intended to encompass non-exclusive inclusion, so that a process, method, article or device including a series of elements includes not only those elements but also other elements not listed explicitly or those elements inherent to such a process, method, article or device. Without more limitations, an element defined by the statement "including a..." shall not be precluded to include additional same elements present in a process, method, article or device including the elements.

## Claims

1. A method of processing a message, the method being used to process operation messages generated by a process during debugging and running of a device, wherein to process the operation messages, a cache space being set up on the device as a cache pool, the cache pool being partitioned into N block caches for caching the operation messages and parameters relating to the operation messages, wherein the method is **characterized by** comprising:
determining (S101), by a processor, whether a first block cache matching a first operation message exists in the cache pool after the first operation message is generated, wherein
the cache pool comprises a plurality of block caches for caching different operation messages, respectively;
updating (S106), by the processor, a condition parameter in the first block cache when the first block cache exists in the cache pool;
determining (S104), by the processor, whether the first block cache satisfies a preset output condition according to the condition parameter in the first block cache; and
outputting (S104), by the processor, an operation message in the first block cache matching the first operation message when the first block cache satisfies the preset output condition, wherein
updating the condition parameter in the first block cache comprises:
adding (S106), by the processor, a count in the first block cache by 1, and
the preset output condition is that the count in the first block cache reaches a preset threshold.

2. The method according to claim 1, further comprising:
determining (S102), by the processor, whether an idle second block cache exists in the cache pool when the first block cache does not exist in the cache pool; and
when the second block cache exists in the cache pool,
writing (S103), by the processor, the first operation message into the second block cache, and
updating (S103), by the processor, a count in the second block cache to 1.

3. The method according to claim 2, further comprising:
selecting, by the processor, a third block cache satisfying the preset output condition from the cache pool when the second block cache does not exist in the cache pool;
outputting, by the processor, a second operation message in the third block cache;
writing, by the processor, the first operation message into the third block cache; and
updating, by the processor, the count in the third block cache to 1.

4. A method of processing a message, the method being used to process operation messages generated by a process during debugging and running of a device, wherein to process the operation messages, a cache space being set up on the device as a cache pool, the cache pool being partitioned into N block caches for caching the operation messages and parameters relating to the operation messages, wherein the method is **characterized by** comprising:
determining (S101), by a processor, whether a first block cache matching a first operation message exists in the cache pool after the first operation message is generated, wherein
the cache pool comprises a plurality of block caches for caching different operation messages, respectively;
updating (S106), by the processor, a condition parameter in the first block cache when the first block cache exists in the cache pool;
determining (S104), by the processor, whether the first block cache satisfies a preset output condition according to the condition parameter in the first block cache; and
outputting (S104), by the processor, an operation message in the first block cache matching the first operation message when the first block cache satisfies the preset output condition,
wherein a start time and an end time correspond to the first operation message, the start time being the time when the first operation message is first generated and the end time being the time when the first operation message is last generated, and wherein
updating (S106) the condition parameter in the first block cache further comprises:
updating, by the processor, the end time in the first block cache to current time; and the preset output condition is that a difference between the current time and the end time in the first block cache is greater than a preset threshold.

5. The method according to claim 4, further comprising:
determining (S102), by the processor, whether an idle second block cache exists in the cache pool when the first block cache does not exist in the cache pool; and
when the second block cache exists in the cache pool,
writing (S103), by the processor, the first operation message into the second block cache, and
updating (S103), by the processor, start time and the end time in the second block cache to the current time.

6. The method according to claim 5, further comprising:
selecting, by the processor, a third block cache from the cache pool when the second block cache does not exist in the cache pool;
outputting, by the processor, a second operation message in the third block cache;
writing, by the processor, the first operation message into the third block cache; and
updating, by the processor, the start time and the end time in the third block cache to the current time.

7. A device for processing a message, the device being used to process operation messages generated by a process during debugging and running of the device, wherein to process the operation messages, a cache space being set up on the device as a cache pool, the cache pool being partitioned into N block caches for caching the operation messages and parameters relating to the operation messages, wherein the device is **characterized by** comprising:
a processor (601); and
a non-transitory storage medium (603) storing machine-executable instructions, wherein by reading and executing the machine-executable instructions, the processor is caused to:
determine whether a first block cache matching a first operation message exists in the cache pool after the first operation message is generated, wherein the cache pool comprises a plurality of block caches for caching different operation messages, respectively;
update a condition parameter in the first block cache when the first block cache exists in the cache pool;
determine whether the first block cache satisfies a preset output condition according to the condition parameter in the first block cache; and
output an operation message in the first block cache matching the first operation message when the first block cache satisfies the preset output condition, wherein
when updating the condition parameter in the first block cache, the processor is further caused by the machine-executable instructions to:
add a count in the first block cache by 1, and
the preset output condition is that the count in the first block cache reaches a preset threshold.

8. The device according to claim 7, wherein when the first block cache does not exist in the cache pool, the processor (601) is further caused by the machine-executable instructions to:
determine whether an idle second block cache exists in the cache pool; and
when the second block cache exists in the cache pool,
write the first operation message into the second block cache, and
update a count in the second block cache to 1.

9. The device according to claim 8, wherein when the second block cache does not exist in the cache pool, the processor (601) is further caused by the machine-executable instructions to:
select a third block cache satisfying the preset output condition from the cache pool;
output a second operation message in the third block cache;
write the first operation message into the third block cache; and
update the count in the third block cache to 1.

10. A device for processing a message, the device being used to process operation messages generated by a process during debugging and running of the device, wherein to process the operation messages, a cache space being set up on the device as a cache pool, the cache pool being partitioned into N block caches for caching the operation messages and parameters relating to the operation messages, wherein the device is **characterized by** comprising:
a processor (601); and
a non-transitory storage medium (603) storing machine-executable instructions, wherein by reading and executing the machine-executable instructions, the processor is caused to:
determine whether a first block cache matching a first operation message exists in the cache pool after the first operation message is generated, wherein the cache pool comprises a plurality of block caches for caching different operation messages, respectively;
update a condition parameter in the first block cache when the first block cache exists in the cache pool;
determine whether the first block cache satisfies a preset output condition according to the condition parameter in the first block cache; and
output an operation message in the first block cache matching the first operation message when the first block cache satisfies the preset output condition,
wherein a start time and an end time correspond to the first operation message, the start time being the time when the first operation message is first generated and the end time being the time when the first operation message is last generated, and wherein
when updating the condition parameter in the first block cache, the processor (601) is further caused by the machine-executable instructions to:
update the end time in the first block cache to current time; and
the preset output condition is that a difference between the current time and the end time in the first block cache is greater than a preset threshold.

11. The device according to claim 10, wherein when the first block cache does not exist in the cache pool, the processor (601) is further caused by the machine-executable instructions to:
determine whether an idle second block cache exists in the cache pool; and
when the second block cache exists in the cache pool,
write the first operation message into the second block cache, and
update start time and the end time in the second block cache to the current time.

12. The device according to claim 11, wherein when the second block cache does not exist in the cache pool, the processor (601) is further caused by the machine-executable instructions to:
select a third block cache from the cache pool;
output a second operation message in the third block cache;
write the first operation message into the third block cache; and
update the start time and the end time in the third block cache to the current time.

## Patentansprüche

1. Verfahren zum Verarbeiten einer Nachricht, wobei das Verfahren verwendet wird für das Verarbeiten von Operationsnachrichten, die durch einen Prozess während des Debuggings und Betreibens eines Geräts erzeugt werden, wobei für das Verarbeiten der Operationsnachrichten ein Cacheraum an dem Gerät als ein Cachepool eingerichtet wird, wobei der Cachepool in N Blockcaches für das Cachen der Operationsnachrichten und von Parametern in Bezug auf die Operationsnachrichten unterteilt ist, wobei das Verfahren **gekennzeichnet ist durch**:
Bestimmen (S101), **durch** einen Prozessor, ob ein erster Blockcache in Entsprechung zu einer ersten Operationsnachricht in dem Cachepool nach dem Erzeugen der ersten Operationsnachricht existiert, wobei der Cachepool eine Vielzahl von Blockcaches für das Cachen von jeweils verschiedenen Operationsnachrichten umfasst,
Aktualisieren (S106), **durch** den Prozessor, eines Bedingungsparameters in dem ersten Blockcache, wenn der erste Blockcache in dem Cachepool existiert,
Bestimmen (S104), **durch** den Prozessor, ob der erste Blockcache eine vorgegebene Ausgabebedingung erfüllt, gemäß dem Bedingungsparameter in dem ersten Blockcache, und
Ausgeben (S104), **durch** den Prozessor, einer Operationsnachricht in dem ersten Blockcache in Entsprechung zu der ersten Operationsnachricht, wenn der erste Blockcache die vorgegebene Ausgabebedingung erfüllt,
wobei das Aktualisieren des Bedingungsparameters in dem ersten Blockcache umfasst:
Erhöhen (S106), **durch** den Prozessor, einer Zählung in dem ersten Blockcache um 1, und
wobei die vorgegebene Ausgabebedingung darin besteht, dass die Zählung in dem ersten Blockcache einen vorgegebenen Schwellwert erreicht.

2. Verfahren nach Anspruch 1, das weiterhin umfasst:
Bestimmen (S102), durch den Prozessor, ob ein freier zweiter Blockcache in dem Cachepool existiert, wenn der erste Blockcache nicht in dem Cachepool existiert, und
wenn der zweite Blockcache in dem Cachepool existiert:
Schreiben (S103), durch den Prozessor, der ersten Operationsnachricht in den zweiten Blockcache, und
Aktualisieren (S103), durch den Prozessor, einer Zählung in dem zweiten Blockcache zu 1.

3. Verfahren nach Anspruch 2, das weiterhin umfasst:
Auswählen, durch den Prozessor, eines dritten Blockcaches, der die vorgegebene Ausgabebedingung erfüllt, aus dem Cachepool, wenn der zweite Blockcache nicht in dem Cachepool existiert,
Ausgeben, durch den Prozessor, einer zweiten Operationsnachricht in dem dritten Blockcache,
Schreiben, durch den Prozessor, der ersten Operationsnachricht in den dritten Blockcache, und
Aktualisieren, durch den Prozessor, der Zählung in dem dritten Blockcache zu 1.

4. Verfahren zum Verarbeiten einer Nachricht, wobei das Verfahren verwendet wird für das Verarbeiten von Operationsnachrichten, die durch einen Prozess während des Debuggings und Betreibens eines Geräts erzeugt werden, wobei für das Verarbeiten der Operationsnachrichten ein Cacheraum an dem Gerät als ein Cachepool eingerichtet wird, wobei der Cachepool in N Blockcaches für das Cachen der Operationsnachrichten und von Parametern in Bezug auf die Operationsnachrichten unterteilt ist, wobei das Verfahren **gekennzeichnet ist durch**:
Bestimmen (S101), **durch** einen Prozessor, ob ein erster Blockcache in Entsprechung zu einer ersten Operationsnachricht in dem Cachepool nach dem Erzeugen der ersten Operationsnachricht existiert, wobei der Cachepool eine Vielzahl von Blockcaches für das Cachen von jeweils verschiedenen Operationsnachrichten umfasst,
Aktualisieren (S106), **durch** den Prozessor, eines Bedingungsparameters in dem ersten Blockcache, wenn der erste Blockcache in dem Cachepool existiert,
Bestimmen (S104), **durch** den Prozessor, ob der erste Blockcache eine vorgegebene Ausgabebedingung erfüllt, gemäß dem Bedingungsparameter in dem ersten Blockcache, und
Ausgeben (S104), **durch** den Prozessor, einer Operationsnachricht in dem ersten Blockcache in Entsprechung zu der ersten Operationsnachricht, wenn der erste Blockcache die vorgegebene Ausgabebedingung erfüllt,
wobei eine Startzeit und eine Endzeit der ersten Operationsnachricht entsprechen, wobei die Startzeit die Zeit ist, zu der die erste Operationsnachricht zuerst erzeugt wird, und wobei die Endzeit die Zeit ist, zu der die erste Operationsnachricht zuletzt erzeugt wird, und
wobei das Aktualisieren (S106) des Bedingungsparameters in dem ersten Blockcache weiterhin umfasst:
Aktualisieren, **durch** den Prozessor, der Endzeit in dem ersten Blockcache zu der aktuellen Zeit, und
wobei die vorgegebene Ausgabebedingung darin besteht, dass eine Differenz zwischen der aktuellen Zeit und der Endzeit in dem ersten Blockcache größer als ein vorgegebener Schwellwert ist.

5. Verfahren nach Anspruch 4, das weiterhin umfasst:
Bestimmen (S102), durch den Prozessor, ob ein freier zweiter Blockcache in dem Cachepool existiert, wenn der erste Blockcache nicht in dem Cachepool existiert, und
wenn der zweite Blockcache in dem Cachepool existiert:
Schreiben (S103), durch den Prozessor, der ersten Operationsnachricht in den zweiten Blockcache, und
Aktualisieren (S103), durch den Prozessor, der Startzeit und der Endzeit in dem zweiten Blockcache zu der aktuellen Zeit.

6. Verfahren nach Anspruch 5, das weiterhin umfasst:
Auswählen, durch den Prozessor, eines dritten Blockcaches aus dem Cachepool, wenn der zweite Blockcache nicht in dem Cachepool existiert,
Ausgeben, durch den Prozessor, einer zweiten Operationsnachricht in dem dritten Blockcache,
Schreiben, durch den Prozessor, der ersten Operationsnachricht in den dritten Blockcache, und
Aktualisieren, durch den Prozessor, der Startzeit und der Endzeit in dem dritten Blockcache zu der aktuellen Zeit.

7. Gerät zum Verarbeiten einer Nachricht, wobei das Gerät verwendet wird für das Verarbeiten von Operationsnachrichten, die durch einen Prozess während des Debuggings und Betreibens des Geräts erzeugt werden, wobei für das Verarbeiten der Operationsnachrichten ein Cacheraum an dem Gerät als ein Cachepool eingerichtet wird, wobei der Cachepool in N Blockcaches für das Cachen der Operationsnachrichten und von Parametern in Bezug auf die Operationsnachrichten unterteilt ist, wobei das Gerät **gekennzeichnet ist durch**:
einen Prozessor (601), und
ein nicht-transitorisches Speichermedium (603), das maschinenausführbare Befehle speichert, wobei **durch** das Lesen und Ausführen der maschinenausführbaren Befehle der Prozessor veranlasst wird zum:
Bestimmen, ob ein erster Blockcache in Entsprechung zu einer ersten Operationsnachricht in dem Cachepool nach dem Erzeugen der ersten Operationsnachricht existiert, wobei der Cachepool eine Vielzahl von Blockcaches für das Cachen von jeweils verschiedenen Operationsnachrichten umfasst,
Aktualisieren eines Bedingungsparameters in dem ersten Blockcache, wenn der erste Blockcache in dem Cachepool existiert,
Bestimmen, ob der erste Blockcache eine vorgegebene Ausgabebedingung erfüllt, gemäß dem Bedingungsparameter in dem ersten Blockcache, und
Ausgeben einer Operationsnachricht in dem ersten Blockcache in Entsprechung zu der ersten Operationsnachricht, wenn der erste Blockcache die vorgegebene Ausgabebedingung erfüllt,
wobei beim Aktualisieren des Bedingungsparameters in dem ersten Blockcache der Prozessor weiterhin **durch** die maschinenausführbaren Befehle veranlasst wird zum:
Erhöhen einer Zählung in dem ersten Blockcache um 1, und
wobei die vorgegebene Ausgabebedingung darin besteht, dass die Zählung in dem ersten Blockcache einen vorgegebenen Schwellwert erreicht.

8. Gerät nach Anspruch 7, wobei, wenn der erste Blockcache nicht in dem Cachepool existiert, der Prozessor (601) weiterhin durch die maschinenausführbaren Befehle veranlasst wird zum:
Bestimmen, ob ein freier zweiter Blockcache in dem Cachepool existiert, und
wenn der zweite Blockcache in dem Cachepool existiert:
Schreiben der ersten Operationsnachricht in den zweiten Blockcache, und
Aktualisieren einer Zählung in dem zweiten Blockcache zu 1.

9. Gerät nach Anspruch 8, wobei, wenn der zweite Blockcache nicht in dem Cachepool existiert, der Prozessor (601) weiterhin durch die maschinenausführbaren Befehle veranlasst wird zum:
Auswählen eines dritten Blockcaches, der die vorgegebene Ausgabebedingung erfüllt, aus dem Cachepool,
Ausgeben einer zweiten Operationsnachricht in dem dritten Blockcache,
Schreiben der ersten Operationsnachricht in den dritten Blockcache, und
Aktualisieren der Zählung in dem dritten Blockcache zu 1.

10. Gerät zum Verarbeiten einer Nachricht, wobei das Gerät verwendet wird für das Verarbeiten von Operationsnachrichten, die durch einen Prozess während des Debuggings und Betreibens des Geräts erzeugt werden, wobei für das Verarbeiten der Operationsnachrichten ein Cacheraum an dem Gerät als ein Cachepool eingerichtet wird, wobei der Cachepool in N Blockcaches für das Cachen der Operationsnachrichten und von Parametern in Bezug auf die Operationsnachrichten unterteilt ist, wobei das Gerät **gekennzeichnet ist durch**:
einen Prozessor (601), und
ein nicht-transitorisches Speichermedium (603), das maschinenausführbare Befehle speichert, wobei **durch** das Lesen und Ausführen der maschinenausführbaren Befehle der Prozessor veranlasst wird zum:
Bestimmen, ob ein erster Blockcache in Entsprechung zu einer ersten Operationsnachricht in dem Cachepool nach dem Erzeugen der ersten Operationsnachricht existiert, wobei der Cachepool eine Vielzahl von Blockcaches für das Cachen von jeweils verschiedenen Operationsnachrichten umfasst,
Aktualisieren eines Bedingungsparameters in dem ersten Blockcache, wenn der erste Blockcache in dem Cachepool existiert,
Bestimmen, ob der erste Blockcache eine vorgegebene Ausgabebedingung erfüllt, gemäß dem Bedingungsparameter in dem ersten Blockcache, und
Ausgeben einer Operationsnachricht in dem ersten Blockcache in Entsprechung zu der ersten Operationsnachricht, wenn der erste Blockcache die vorgegebene Ausgabebedingung erfüllt,
wobei eine Startzeit und eine Endzeit der ersten Operationsnachricht entsprechen, wobei die Startzeit die Zeit ist, zu der die erste Operationsnachricht zuerst erzeugt wird, und
wobei die Endzeit die Zeit ist, zu der die erste Operationsnachricht zuletzt erzeugt wird,
und
wobei beim Aktualisieren des Bedingungsparameters in dem ersten Blockcache der Prozessor (601) weiterhin **durch** die maschinenausführbaren Befehle veranlasst wird zum:
Aktualisieren der Endzeit in dem ersten Blockcache zu der aktuellen Zeit, und
wobei die vorgegebene Ausgabebedingung darin besteht, dass eine Differenz zwischen der aktuellen Zeit und der Endzeit in dem ersten Blockcache größer als ein vorgegebener Schwellwert ist.

11. Gerät nach Anspruch 10, wobei, wenn der erste Blockcache nicht in dem Cachepool existiert, der Prozessor (601) weiterhin durch die maschinenausführbaren Befehle veranlasst wird zum:
Bestimmen, ob ein freier zweiter Blockcache in dem Cachepool existiert, und
wenn der zweite Blockcache in dem Cachepool existiert:
Schreiben der ersten Operationsnachricht in den zweiten Blockcache, und
Aktualisieren der Startzeit und der Endzeit in dem zweiten Blockcache zu der aktuellen Zeit.

12. Gerät nach Anspruch 11, wobei, wenn der zweite Blockcache nicht in dem Cachepool existiert, der Prozessor (601) weiterhin durch die maschinenausführbaren Befehle veranlasst wird zum:
Auswählen eines dritten Blockcaches aus dem Cachepool,
Ausgeben einer zweiten Operationsnachricht in dem dritten Blockcache,
Schreiben der ersten Operationsnachricht in den dritten Blockcache, und
Aktualisieren der Startzeit und der Endzeit in dem dritten Blockcache zu der aktuellen Zeit.

## Revendications

1. Procédé de traitement d'un message, le procédé étant utilisé pour traiter des messages fonctionnels générés par un traitement pendant un débogage et l'exécution d'un dispositif, où, pour traiter des messages fonctionnels, un espace d'antémémoire est mis en œuvre sur le dispositif sous forme d'une réserve d'antémémoire, la réserve d'antémémoire étant divisée en N antémémoires de blocs dans le but de mettre en antémémoire les messages fonctionnels et des paramètres se rapportant aux messages fonctionnels, le procédé étant **caractérisé en ce qu'**il comprend :
la détermination (S101), par un processeur, de ce qu'une première antémémoire de bloc correspondant à un premier message fonctionnel se trouve dans la réserve d'antémémoire après la génération du premier message fonctionnel, la réserve d'antémémoire comprenant une pluralité d'antémémoires de blocs destinées à mettre respectivement en antémémoire différents messages fonctionnels,
la mise à jour (S106), par le processeur, d'un paramètre conditionnel dans la première antémémoire de bloc lorsque la première antémémoire de bloc se trouve dans la réserve d'antémémoire,
la détermination (S104), par le processeur, de ce que la première antémémoire de bloc satisfait à une condition de sortie prédéterminée conforme au paramètre fonctionnel dans la première antémémoire de bloc, et
la délivrance (S104), par le processeur, d'un message fonctionnel dans la première antémémoire de bloc correspondant au premier message fonctionnel lorsque la première antémémoire de bloc satisfait à la condition de sortie prédéterminée, dans lequel :
la mise à jour du paramètre conditionnel dans la première antémémoire de bloc comprend :
l'ajout (S106), par le processeur, d'un comptage par 1 dans la première antémémoire de bloc, et où
la condition de sortie prédéterminée est que le comptage dans la première antémémoire de bloc atteint un seuil prédéterminé.

2. Procédé selon la revendication 1, comprenant en outre :
la détermination (S102), par le processeur, de ce qu'une deuxième antémémoire de bloc se trouve dans la réserve d'antémémoire lorsqu'il n'existe pas de première antémémoire de bloc dans la réserve d'antémémoire, et
lorsque la deuxième antémémoire de bloc se trouve dans la réserve d'antémémoire :
l'écriture (S103), par le processeur, du premier message fonctionnel dans la deuxième antémémoire de bloc, et
la mise à jour (S103), par le processeur, d'un comptage de 1 dans la deuxième antémémoire de bloc.

3. Procédé selon la revendication 2, comprenant en outre :
la sélection, par le processeur, d'une troisième antémémoire de bloc satisfaisant à la condition de sortie prédéterminée à partir de la réserve d'antémémoire lorsqu'il n'existe pas de deuxième antémémoire de bloc dans la réserve d'antémémoire,
la délivrance, par le processeur, d'un second message fonctionnel dans la troisième antémémoire de bloc,
l'écriture, par le processeur, du premier message fonctionnel dans la troisième antémémoire de bloc, et
la mise à jour, par le processeur, du comptage à 1 dans la troisième antémémoire de bloc.

4. Procédé de traitement d'un message, le procédé étant utilisé pour traiter des messages fonctionnels générés par un traitement pendant un débogage et l'exécution d'un dispositif, où, pour traiter des messages fonctionnels, un espace d'antémémoire est mis en œuvre sur le dispositif sous forme d'une réserve d'antémémoire, la réserve d'antémémoire étant divisée en N antémémoires de blocs dans le but de mettre en antémémoire les messages fonctionnels et des paramètres se rapportant aux messages fonctionnels, le procédé étant **caractérisé en ce qu'**il comprend :
la détermination (S101), par un processeur, de ce qu'une première antémémoire de bloc correspondant à un premier message fonctionnel se trouve dans la réserve d'antémémoire après la génération du premier message fonctionnel, la réserve d'antémémoire comprenant une pluralité d'antémémoires de blocs destinées à mettre respectivement en antémémoire différents messages fonctionnels,
la mise à jour (S106), par le processeur, d'un paramètre conditionnel dans la première antémémoire de bloc lorsque la première antémémoire de bloc se trouve dans la réserve d'antémémoire,
la détermination (S104), par le processeur, de ce que la première antémémoire de bloc satisfait à une condition de sortie prédéterminée conforme au paramètre fonctionnel dans la première antémémoire de bloc, et
la délivrance (S104), par le processeur, d'un message fonctionnel dans la première antémémoire de bloc correspondant au premier message fonctionnel lorsque la première antémémoire de bloc satisfait à la condition de sortie prédéterminée,
dans lequel un instant de début et un instant de fin correspondent au premier message fonctionnel, l'instant de début étant l'instant de la première génération du premier message fonctionnel et l'instant de fin étant l'instant de la dernière génération du premier message fonctionnel, et dans lequel :
la mise à jour (S106) du paramètre conditionnel dans la première antémémoire de bloc comprend en outre :
la mise à jour, par le processeur, de l'instant de fin dans la première antémémoire de bloc pour valoir l'instant courant, et où
la condition de sortie prédéterminée est que la différence entre l'instant courant et l'instant de fin dans la première antémémoire de bloc est supérieur à un seuil prédéterminé.

5. Procédé selon la revendication 4, comprenant en outre :
la détermination (S102), par le processeur, de ce qu'une deuxième antémémoire de bloc en attente se trouve dans la réserve d'antémémoire lorsqu'il n'existe pas de première antémémoire de bloc dans la réserve d'antémémoire, et
lorsque la deuxième antémémoire de bloc se trouve dans la réserve d'antémémoire :
l'écriture (S103), par le processeur, du premier message fonctionnel dans la deuxième antémémoire de bloc, et
la mise à jour (S103), par le processeur, de l'instant de début et de l'instant de fin dans la deuxième antémémoire de bloc pour valoir l'instant courant.

6. Procédé selon la revendication 5, comprenant en outre :
la sélection, par le processeur, d'une troisième antémémoire de bloc à partir de la réserve d'antémémoire lorsqu'il n'existe pas de deuxième antémémoire de bloc dans la réserve d'antémémoire,
la délivrance, par le processeur, d'un second message fonctionnel dans la troisième antémémoire de bloc,
l'écriture, par le processeur, du premier message fonctionnel dans la troisième antémémoire de bloc, et
la mise à jour, par le processeur, de l'instant de début et de l'instant de fin dans la troisième antémémoire de bloc pour valoir l'instant courant.

7. Dispositif de traitement d'un message, le dispositif étant utilisé pour traiter des messages fonctionnels générés par un traitement pendant un débogage et l'exécution d'un dispositif, où, pour traiter des messages fonctionnels, un espace d'antémémoire est mis en œuvre sur le dispositif sous forme d'une réserve d'antémémoire, la réserve d'antémémoire étant divisée en N antémémoires de blocs dans le but de mettre en antémémoire les messages fonctionnels et des paramètres se rapportant aux messages fonctionnels, le dispositif étant **caractérisé en ce qu'**il comprend :
un processeur (601), et
un support de stockage non transitoire (603) stockant des instructions exécutables par machine, où, en lisant et en exécutant les instructions exécutables par machine, le processeur est amené à :
déterminer si une première antémémoire de bloc correspondant à un premier message fonctionnel se trouve dans la réserve d'antémémoire après la génération du premier message fonctionnel, la réserve d'antémémoire comprenant une pluralité d'antémémoires de blocs destinées à mettre respectivement en antémémoire différents messages fonctionnels,
mettre à jour un paramètre conditionnel dans la première antémémoire de bloc lorsque la première antémémoire de bloc se trouve dans la réserve d'antémémoire,
déterminer si la première antémémoire de bloc satisfait à une condition de sortie prédéterminée conforme au paramètre fonctionnel dans la première antémémoire de bloc, et
délivrer un message fonctionnel dans la première antémémoire de bloc correspondant au premier message fonctionnel lorsque la première antémémoire de bloc satisfait à la condition de sortie prédéterminée, dans lequel :
lors de la mise à jour du paramètre conditionnel dans la première antémémoire de bloc, le processeur est en outre amené par les instructions exécutables par machine à :
ajouter un comptage par 1 dans la première antémémoire de bloc, et où
la condition de sortie prédéterminée est que le comptage dans la première antémémoire de bloc atteint un seuil prédéterminé.

8. Dispositif selon la revendication 7, dans lequel, lorsqu'il n'existe pas de première antémémoire de bloc dans la réserve d'antémémoire, le processeur (601) est en outre amené par les instructions exécutables par machine à :
déterminer si une deuxième antémémoire de bloc se trouve dans la réserve d'antémémoire lorsqu'il n'existe pas de première antémémoire de bloc dans la réserve d'antémémoire, et
lorsque la deuxième antémémoire de bloc se trouve dans la réserve d'antémémoire :
écrire le premier message fonctionnel dans la deuxième antémémoire de bloc, et
mettre à jour un comptage de 1 dans la deuxième antémémoire de bloc.

9. Dispositif selon la revendication 8, dans lequel, lorsqu'il n'existe pas de deuxième antémémoire de bloc dans la réserve d'antémémoire, le processeur (601) est en outre amené par les instructions exécutables par machine à :
sélectionner une troisième antémémoire de bloc satisfaisant à la condition de sortie prédéterminée à partir de la réserve d'antémémoire,
délivrer un second message fonctionnel dans la troisième antémémoire de bloc,
écrire le premier message fonctionnel dans la troisième antémémoire de bloc, et
mettre à jour le comptage à 1 dans la troisième antémémoire de bloc.

10. Dispositif de traitement d'un message, le dispositif étant utilisé pour traiter des messages fonctionnels générés par un traitement pendant un débogage et l'exécution d'un dispositif, où, pour traiter des messages fonctionnels, un espace d'antémémoire est mis en œuvre sur le dispositif sous forme d'une réserve d'antémémoire, la réserve d'antémémoire étant divisée en N antémémoires de blocs dans le but de mettre en antémémoire les messages fonctionnels et des paramètres se rapportant aux messages fonctionnels, le dispositif étant **caractérisé en ce qu'**il comprend :
un processeur (601), et
un support de stockage non transitoire (603) stockant des instructions exécutables par machine, où, en lisant et en exécutant les instructions exécutables par machine, le processeur est amené à :
déterminer si une première antémémoire de bloc correspondant à un premier message fonctionnel se trouve dans la réserve d'antémémoire après la génération du premier message fonctionnel, la réserve d'antémémoire comprenant une pluralité d'antémémoires de blocs destinées à mettre respectivement en antémémoire différents messages fonctionnels,
mettre à jour un paramètre conditionnel dans la première antémémoire de bloc lorsque la première antémémoire de bloc se trouve dans la réserve d'antémémoire,
déterminer si la première antémémoire de bloc satisfait à une condition de sortie prédéterminée conforme au paramètre fonctionnel dans la première antémémoire de bloc, et
délivrer un message fonctionnel dans la première antémémoire de bloc correspondant au premier message fonctionnel lorsque la première antémémoire de bloc satisfait à la condition de sortie prédéterminée,
dans lequel un instant de début et un instant de fin correspondent au premier message fonctionnel, l'instant de début étant l'instant de la première génération du premier message fonctionnel et l'instant de fin étant l'instant de la dernière génération du premier message fonctionnel, et dans lequel :
lors de la mise à jour du paramètre conditionnel dans la première antémémoire de bloc, le processeur (601) est en outre amené par les instructions exécutables par machine à :
mettre à jour l'instant de fin dans la première antémémoire de bloc pour valoir l'instant courant, et où
la condition de sortie prédéterminée est que la différence entre l'instant courant et l'instant de fin dans la première antémémoire de bloc est supérieur à un seuil prédéterminé.

11. Dispositif selon la revendication 10, dans lequel, lorsqu'il n'existe pas de première antémémoire de bloc dans la réserve d'antémémoire, le processeur (601) est en outre amené par les instructions exécutables par machine à :
déterminer si une deuxième antémémoire de bloc en attente se trouve dans la réserve d'antémémoire, et
lorsque la deuxième antémémoire de bloc se trouve dans la réserve d'antémémoire :
écrire le premier message fonctionnel dans la deuxième antémémoire de bloc, et
mettre à jour l'instant de début et l'instant de fin dans la deuxième antémémoire de bloc pour valoir l'instant courant.

12. Dispositif selon la revendication 11, dans lequel, lorsqu'il n'existe pas de deuxième antémémoire de bloc dans la réserve d'antémémoire, le processeur (601) est en outre amené par les instructions exécutables par machine à :
sélectionner une troisième antémémoire de bloc à partir de la réserve d'antémémoire,
délivrer un second message fonctionnel dans la troisième antémémoire de bloc,
écrire le premier message fonctionnel dans la troisième antémémoire de bloc, et
mettre à jour l'instant de début et l'instant de fin dans la troisième antémémoire de bloc pour valoir l'instant courant.
